(19) Europäisches Patentamt
European Patent Office
Office européen des brevets

(11) EP 3 804 832 A1

(12) **EUROPEAN PATENT APPLICATION**
published in accordance with Art. 153(4) EPC

(43) Date of publication:
**14.04.2021 Bulletin 2021/15**

(21) Application number: **19811242.7**

(22) Date of filing: **31.05.2019**

(51) Int Cl.:
***B01D 39/16*** *(2006.01)* ***B01D 46/52*** *(2006.01)*
***B01D 69/02*** *(2006.01)* ***B01D 69/10*** *(2006.01)*
***B01D 69/12*** *(2006.01)* ***B01D 71/26*** *(2006.01)*
***B01D 71/36*** *(2006.01)* ***B01D 71/48*** *(2006.01)*

(86) International application number:
**PCT/JP2019/021891**

(87) International publication number:
**WO 2019/230983 (05.12.2019 Gazette 2019/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.06.2018 JP 2018106512**

(71) Applicant: **NITTO DENKO CORPORATION**
**Ibaraki-shi**
**Osaka 567-8680 (JP)**

(72) Inventor: **UCHIYAMA Shiho**
**Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

# (54) FILTER MEDIUM AND FILTER UNIT INCLUDING SAME

(57) The filter medium of the present disclosure includes a polytetrafluoroethylene porous membrane and an air-permeable base layer, has a pressure loss $PL_F$ of less than 40 Pa when air is passed therethrough at a linear velocity of 5.3 cm/sec, and has a collection efficiency $CE_F$ of 65% or more when a linear velocity of a gas to be filtered is set to 5.3 cm/sec and particle diameters of particles to be collected are set to be within a range of 0.3 to 0.5 μm. The filter medium of the present disclosure is a novel filter medium that can replace an electret medium and that can prevent a decrease in collection performance due to water vapor in the air, which is unavoidable in an electret medium.

1
4
2
3

FIG.1

EP 3 804 832 A1

## Description

TECHNICAL FIELD

The present invention relates to a filter medium and a filter unit including the same.

BACKGROUND ART

As a filter medium for removing dust and the like contained in the air, a non-woven fabric of synthetic fibers such as a polyolefin resin and a polyester resin is widely used. A type of filter medium using a non-woven fabric is an electret medium which has a low pressure loss but has an increased collection efficiency by charging (see Patent Literature 1).

CITATION LIST.

Patent Literature

Patent Literature 1: JP2006-159133 A

SUMMARY OF INVENTION

Technical Problem

In the electret medium, since electric charge applied to the surfaces of the fibers is lost, a decrease in collection efficiency due to the water vapor in the air is unavoidable.

The present invention aims to provide a novel filter medium that can replace an electret medium and that can prevent a decrease in collection performance due to the water vapor in the air, which is unavoidable in an electret medium.

Solution to Problem

The present invention provides a filter medium including a polytetrafluoroethylene (hereinafter, referred to as "PTFE") porous membrane and an air-permeable base layer, wherein

the filter medium has a pressure loss $PL_F$ of less than 40 Pa when air is passed therethrough at a linear velocity of 5.3 cm/sec, and

the filter medium has a collection efficiency $CE_F$ of 65% or more when a linear velocity of a gas to be filtered is set to 5.3 cm/sec and particle diameters of particles to be collected are set to be within a range of 0.3 to 0.5 $\mu$m.

According to another aspect, the present invention provides a filter unit including the filter medium of the present invention.

Advantageous Effects of Invention

The filter medium according to the present invention has a low pressure loss and a high collection efficiency and can replace an electret medium. In addition, in the filter medium according to the present invention, the collection performance of the medium is ensured by the PTFE porous membrane, not by charging, so that a decrease in collection efficiency due to water vapor in the air can be prevented.

BRIEF DESCRIPTION OF THE DRAWINGS

FIG. 1 is a cross-sectional view schematically showing an example of the filter medium of the present invention.
FIG. 2 is a plan view schematically showing an example of the main surface at the PTFE porous membrane side of the filter medium of the present invention.
FIG. 3 is a perspective view schematically showing an example of the filter unit of the present invention.
FIG. 4 is a perspective view schematically showing an example of a filter pleat pack included in the filter unit of the present invention.

DESCRIPTION OF EMBODIMENTS

Hereinafter, embodiments of the present invention will be described with reference to the drawings. The present invention is not limited to the embodiments described below.

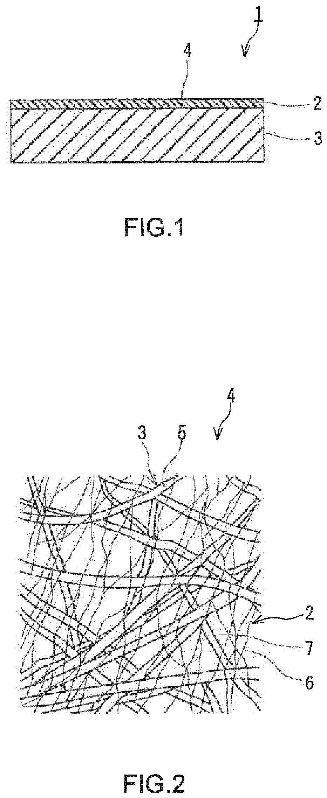

FIG. 1 shows an example of the filter medium of the present disclosure. A filter medium 1 shown in FIG. 1 includes a PTFE porous membrane 2 and an air-permeable base layer 3. The PTFE porous membrane 2 and the air-permeable base layer 3 are joined to each other. In the filter medium 1, the PTFE porous membrane 2 is located at the outermost layer.

The filter medium 1 has a pressure loss $PL_F$ of less than 40 Pa when air is passed therethrough at a linear velocity of 5.3 cm/sec. The pressure loss $PL_F$ may be 35 Pa or less, 30 Pa or less, 25 Pa or less, or even 20 Pa or less.

The pressure loss $PL_F$ can be evaluated as follows. A measurement holder including two plates having the same shape is prepared. Each plate has a through hole (having a circular cross-sectional shape and an effective ventilation area of 100 $cm^2$) formed therein. Next, a filter medium to be evaluated is sandwiched between both plates. The filter medium is sandwiched such that: the through holes of both plates coincide with each other when viewed in a direction perpendicular to the main surfaces of the plates; and the filter medium covers the opening of the through hole of each plate. In addition, the filter medium is sandwiched such that no gap is formed between each plate and the filter medium. In order to prevent a gap from being formed, an O-ring or a fixing member such as a double-faced adhesive tape may be used. In the case of using a fixing member, the fixing member is used such that the flow of air passing through the through holes is not obstructed by the fixing member. Next, the holder is set to a chamber to which a flow meter and a pressure gauge (manometer) are connected, such that air passes through only the through holes and the filter medium located in the through holes. Next, a pressure difference is generated between one surface and the other surface of the holder, and air is made to start flowing through the through holes and the filter medium. The pressure difference (static pressure difference) when the linear velocity of the air passing through the through holes and the filter medium reaches 5.3 cm/sec as a value measured by the flow meter is measured by the pressure gauge. The pressure difference is measured eight times for one medium, and the average value of the pressure differences is regarded as the pressure loss $PL_F$ of the filter medium to be evaluated.

The filter medium 1 has a collection efficiency $CE_F$ of 65% or more when the linear velocity of a gas to be filtered is set to 5.3 cm/sec and the particle diameters of particles to be collected are set to be within the range of 0.3 to 0.5 $\mu$m. The collection efficiency $CE_F$ may be 70% or more, 75% or more, 80% or more, 85% or more, or even 90% or more.

The collection efficiency $CE_F$ can be evaluated as follows. A measurement holder including two plates having the same shape is prepared. Each plate has a through hole (having a circular cross-sectional shape and an effective ventilation area of 100 $cm^2$) formed therein. Next, a filter medium to be evaluated is sandwiched between both plates. The filter medium is sandwiched such that: the through holes of both plates coincide with each other when viewed in a direction perpendicular to the main surfaces of the plates; and the filter medium covers the opening of the through hole of each plate. In addition, the filter medium is sandwiched such that no gap is formed between each plate and the filter medium. In order to prevent a gap from being formed, an O-ring or a fixing member such as a double-faced adhesive tape may be used. In the case of using a fixing member, the fixing member is used such that the flow of air passing through the through holes is not obstructed by the fixing member. Next, the holder is set to a chamber to which a flow meter and a pressure gauge (manometer) are connected, such that air passes through only the through holes and the filter medium located in the through holes. Next, a pressure difference is generated between one surface and the other surface of the holder, and air is made to start flowing through the through holes and the filter medium. Next, the pressure difference is adjusted such that the linear velocity of the air passing through the through holes and the medium is maintained at 5.3 cm/sec as a value measured by the flow meter. Next, polyalphaolefin particles having a particle diameter of 0.3 to 0.5 $\mu$m (average particle diameter: 0.4 $\mu$m) are included at a concentration of $4\times10^8$ particles/L or more in the air to be caused to pass through the medium. Then, the concentration of the polyalphaolefin particles included in the air having passed through the medium is measured using a particle counter disposed downstream of the measurement holder, and the collection efficiency $CE_F$ of the filter medium to be evaluated is obtained by the following equation (1).

$$\text{Equation (1): Collection efficiency } CE_F = [1-(\text{downstream particle concentration})/(\text{upstream particle concentration})]\times100(\%)$$

The filter medium 1 is a filter medium having a high collection efficiency and a low pressure loss. The PF (Performance Factor) value of the filter medium 1 is, for example, 30 or more, and may be 32 or more, 33 or more, or even 34 or more. The PF value is obtained by the following equation (2) from the pressure loss $PL_F$ and the collection efficiency $CE_F$ of the filter medium 1.

$$\text{Equation (2): PF value} = \{-\log[(100-CE_F)/100]/(PL_F/9.8)\}\times 100$$

The PTFE porous membrane 2 is typically formed of countless PTFE fibrils, which are fine fibrous structures. The PTFE porous membrane 2 may have PTFE nodes connected to a plurality of fibrils. Each node is typically observed as a node having an area of 2$\mu m^2$ or more in a magnified image of the surface of the PTFE porous membrane. The area may be 3 $\mu m^2$ or more, 5 $\mu m^2$ or more, 7 $\mu m^2$ or more, or even 10 $\mu m^2$ or more. The upper limit of the area is, for example, 450 $\mu m^2$ or less. The ratio of the length in the long axis direction to the length in the short axis direction of the node is, for example, 10 or less, and may be 7 or less, 5 or less, 3 or less, or even 2 or less. The magnified image can be obtained, for example, by a magnification observation method with a scanning electron microscope (hereinafter, referred to as "SEM"), an optical microscope, or the like.

The PTFE porous membrane 2 can be formed, for example, by molding a mixture of unsintered PTFE powder (fine powder) and a liquid lubricant into a film by a method such as extrusion and/or rolling, removing the liquid lubricant from the obtained unsintered film, and then stretching the unsintered film. Examples of the liquid lubricant include hydrocarbon oils such as naphtha, white oil, dodecane, and liquid paraffin. However, the liquid lubricant is not limited as long as the liquid lubricant can wet the surface of the PTFE powder and can be subsequently removed by a method such as drying. An example of the stretching is biaxial stretching that is a combination of longitudinal stretching at a stretch ratio of 5 to 100 times in the MD direction (longitudinal direction) of a film and a stretching temperature of 100 to 380°C and transverse stretching at a stretch ratio of 10 to 300 times in the TD direction (width direction) of the film and a stretching temperature of 100 to 380°C. The lower limit of the stretch ratio of the longitudinal stretching may be more than 5 times, and may be 20 times or more. The lower limit of the stretch ratio of the transverse stretching may be more than 10 times, and may be 30 times or more. For the longitudinal stretching and the transverse stretching, either stretching may be performed first. In addition, the stretching conditions (stretch ratio and stretching temperature) may be opposite to those described above between the longitudinal stretching and the transverse stretching. The total stretch ratio that is the product of the stretch ratio of the longitudinal stretching and the stretch ratio of the transverse stretching is, for example, 10000 times or more, and may be 12000 times or more, 13000 times or more, 14000 times or more, or even 15000 times or more. At any timing after the formation of the unsintered film, sintering of heating the film to a temperature equal to or higher than the melting point of PTFE may be performed. However, in the case of performing stretching at a stretching temperature equal to or higher than the melting point of PTFE, it is preferable to omit sintering in order to prevent a decrease in the collection efficiencies of the PTFE porous membrane 2 and the filter medium 1 due to PTFE fibrils formed by stretching being fused to each other.

The PTFE included in the PTFE porous membrane 2 may be a modified PTFE having a structural unit other than the structural unit (TFE unit) derived from a tetrafluoroethylene monomer. The content of the TFE unit in the modified PTFE is preferably 50 mol% or more, more preferably 80 mol% or more, further preferably 90 mol% or more, and particularly preferably 95 mol% or more.

The thickness of the PTFE porous membrane 2 is, for example, less than 3.0 $\mu m$, and may be 2.5 $\mu m$ or less, 2.0 $\mu m$ or less, or even 1.8 $\mu m$ or less. The lower limit of the thickness of the PTFE porous membrane 2 is, for example, 0.1 $\mu m$ or more.

The weight per unit area of the PTFE porous membrane 2 is, for example, less than 0.5 $g/m^2$, and may be 0.4 $g/m^2$ or less, 0.3 $g/m^2$ or less, or even 0.2 $g/m^2$ or less. The lower limit of the weight per unit area of the PTFE porous membrane 2 is, for example, 0.1 $g/m^2$ or more. The weight per unit area of the PTFE porous membrane 2 can be obtained by dividing the weight of the PTFE porous membrane 2 by the area of the main surface thereof.

A pressure loss $PL_M$ of the PTFE porous membrane 2 when air is passed therethrough at a linear velocity of 5.3 cm, a collection efficiency $CE_M$ of the PTFE porous membrane 2 when the linear velocity of a gas to be filtered is set to 5.3 cm/sec and the particle diameters of particles to be collected are set to be within the range of 0.3 to 0.5 $\mu m$, and the PF value of the PTFE porous membrane 2 can normally be within ranges that are the same as the above-described respective ranges for the pressure loss $PL_F$, the collection efficiency $CE_F$, and the PF value of the filter medium 1. The pressure loss $PL_M$ and the collection efficiency $CE_M$ of the PTFE porous membrane 2 can be evaluated by applying the above methods for measuring the pressure loss $PL_F$ and the collection efficiency $CE_F$ of the filter medium 1. Specifically, the PTFE porous membrane 2 to be evaluated may be fixed to the measurement holder instead of the filter medium 1. The PF value of the PTFE porous membrane 2 is obtained by the following equation (3) from the pressure loss $PL_M$ and the collection efficiency $CE_M$ of the PTFE porous membrane 2.

$$\text{Equation (3): PF value} = \{-\log[(100-CE_M)/100]/(PL_M/9.8)\}\times 100$$

The air-permeable base layer 3 is normally a layer having higher air permeability in the thickness direction thereof as compared to the PTFE porous membrane 2. The air-permeable base layer 3 includes, for example, a fiber material. The fiber material that can be included in the air-permeable base layer 3 may be any of a long fiber, a short fiber, and mixed fibers thereof. The air-permeable base layer 3 is, for example, a non-woven fabric, a woven fabric, or a mesh. The air-permeable base layer 3 is preferably a non-woven fabric since the non-woven fabric has excellent air permeability, strength, and flexibility. Examples of the type of the non-woven fabric include an airlaid non-woven fabric, a melt-blown non-woven fabric, a spunbond non-woven fabric, and a thermal bond non-woven fabric. The air-permeable base layer 3 may be a layer obtained by joining two or more different types of non-woven fabrics (for example, an air-permeable support member described in JP 2014-30825 A). However, the air-permeable base layer 3 is not limited to these examples.

Examples of the material included in the air-permeable base layer 3 include: polyolefin resins such as polyethylene (PE) and polypropylene (PP); polyester resins such as polyethylene terephthalate (PET); polyamide resins including aromatic polyamides; and composite materials thereof. Since the joining property with the PTFE porous membrane 2 is excellent, the material is preferably a polyolefin resin, and more preferably PE.

An example of a composite material included in the air-permeable base layer 3 is a composite fiber having a core-sheath structure that has a core and a sheath covering the core. The materials included in the core and the sheath of the composite fiber are different from each other. The melting point of the material included in the sheath is preferably lower than the melting point of the material included in the core. Examples of the material included in the core include polyester resins such as PET. Examples of the material included in the sheath include polyolefin resins such as PE. In the case where the material included in the sheath is a polyolefin resin, the polyolefin resin having excellent joining property with the PTFE porous membrane 2 can be exposed on the surface, of the air-permeable base layer 3, that is joined to the PTFE porous membrane 2.

A more specific example of the air-permeable base layer 3 is a non-woven fabric which includes a composite fiber having a core-sheath structure with a core including a polyester resin and a sheath including a polyolefin resin and covering the core.

The average fiber diameter of the fibers that can be included in the air-permeable base layer 3 is, for example, 1 to 50 μm, and may be 1 to 30 μm or 10 to 30 μm.

The thickness of the air-permeable base layer 3 is, for example, 50 to 1000 μm, and may be 100 to 500 μm or 200 to 400 μm.

The upper limit of the weight per unit area of the air-permeable base layer 3 is, for example, 1000 $g/m^2$ or less, and may be 500 $g/m^2$ or less, 200 $g/m^2$ or less, or even 100 $g/m^2$ or less. The lower limit of the weight per unit area of the air-permeable base layer 3 is, for example, 10 $g/m^2$ or more, and may be 50 $g/m^2$ or more.

The air-permeable base layer 3 may be subjected to a water repellent treatment and/or an oil repellent treatment. The water repellent treatment and the oil repellent treatment on the air-permeable base layer can be performed by a known method, for example, by applying and drying a treatment liquid containing a water-repellent material and/or an oil-repellent material. As the water-repellent material and the oil-repellent material, for example, various compounds containing a fluorine atom are known.

In the filter medium 1 of FIG. 1, the PTFE porous membrane 2 is located at the outermost layer and forms an exposed surface of the filter medium 1. The entirety of the exposed surface may be formed of the PTFE porous membrane 2. Furthermore, in the filter medium 1, the air-permeable base layer 3 may be exposed in the voids between the fibrils of the PTFE porous membrane 2 when the PTFE porous membrane 2 is viewed in a direction perpendicular to a main surface of the PTFE porous membrane 2. FIG. 2 shows an example of the filter medium 1 in which the air-permeable base layer 3 is exposed in the voids. FIG. 2 shows the main surface of the PTFE porous membrane 2 that is viewed in the direction perpendicular to the main surface. As shown in FIG. 2, the PTFE porous membrane 2 has countless fibrils 6. The air-permeable base layer 3 is a non-woven fabric which includes fibers 5. A plurality of the fibrils 6 extend so as to traverse the air-permeable region (voids between the fibers 5) of the air-permeable base layer 3. There are voids 7 between the fibrils 6 of the PTFE porous membrane 2. The air-permeable base layer 3 (the fibers 5 thereof) is exposed in the voids 7. The PTFE is a material having low joining property. However, in the filter medium 1 in which the air-permeable base layer 3 is exposed in the voids 7, the joining property of a further layer and/or member to the surface at the PTFE porous membrane 2 side can be improved. The exposure of the air-permeable base layer 3 in the voids between the fibrils can be confirmed, for example, in a magnified image of the main surface by an SEM or the like. The magnification of the magnified image may be, for example, 500 times.

The filter medium 1 in which the PTFE porous membrane 2 is located at the outermost layer can be a medium in which the surface at the PTFE porous membrane 2 side is washable with water. In the present description, the term "washable with water" means that a decrease in the collection efficiency $CE_F$ of the filter medium 1 is not substantially observed when the filter medium 1 is made into a circular shape with a diameter of 47 mm, 0.2 g of "11 Types Kanto Loam", which is the test powder described in JIS Z8901, is put on the surface at the PTFE porous membrane 2 side of the filter medium 1, the powder is sucked from the opposite side at a linear velocity of 20 cm/sec, and then the surface is washed with about 10 mL of water. A decrease in the collection efficiency $CE_F$ being not substantially observed means that a decrease in the collection efficiency $CE_F$ is, for example, less than 30%, preferably 25% or less, and more preferably 20% or less. Normally, an electret medium is not washable with water.

The filter medium 1 may include two or more PTFE porous membranes 2 and/or two or more air-permeable base layers 3. The filter medium 1 may have a three-layer structure including one PTFE porous membrane 2 and two air-permeable base layers 3 that sandwich the PTFE porous membrane 2 therebetween. In this case, the strength and the durability of the filter medium 1 can be improved. In addition, in this case, one air-permeable base layer 3 located at the upstream side of airflow when the filter medium 1 is used can also be used as a pre-filter for collecting particles that are contained in the airflow and that have a relatively large size.

In the filter medium 1 having the above three-layer structure, one air-permeable base layer 3 and the other air-permeable base layer 3 may be joined directly to each other in the voids 7 between the fibrils 6 of the PTFE porous membrane 2.

The weight per unit area of the filter medium 1 is, for example, 10 to 1000 g/$m^2$, and may be 30 to 500 g/$m^2$ or 50 to 100 g/$m^2$. The weight per unit area of the filter medium 1 can be obtained by dividing the weight of the filter medium 1 by the area of the main surface thereof.

The thickness of the filter medium 1 is, for example, 50 to 1000 $\mu$m, and may be 100 to 500 $\mu$m or 200 to 400 $\mu$m.

The filter medium 1 may include any layer and/or member as long as the filter medium 1 includes the PTFE porous membrane 2 and the air-permeable base layer 3.

The filter medium 1 can be formed by a known method, for example, by a method (heat lamination method) of heat-laminating a stack including the PTFE porous membrane 2 and the air-permeable base layer 3. In the formation of the filter medium 1 by the heat lamination method, an increase in pressure loss at a joined portion of each layer can be inhibited. However, the method for forming the filter medium 1 is not limited to the heat lamination method.

The filter medium 1 can be used, for example, for allowing a gas such as air to pass therethrough and removing foreign matter such as dust contained in the gas. The filter medium 1 is typically an air filter medium that allows air to pass therethrough.

The filter medium 1 in which the PTFE porous membrane 2 is located at the outermost layer may be used such that the PTFE porous membrane 2 is located at the upstream side of airflow with respect to the air-permeable base layer 3.

The filter medium 1 can be used, for example, for various products such as air purifiers, air conditioners, and cleaners. The air conditioners and the air purifiers include not only small products mainly intended for indoor use, but also large products such as air conditioning systems for buildings and products provided in transportation equipment such as automobiles and railroad vehicles. In addition, the filter medium 1 can be used for applications where an electret medium has been conventionally used. However, the application of the filter medium 1 is not limited to these examples.

The filter medium 1 may be used as a filter unit described below.

[Filter Unit]

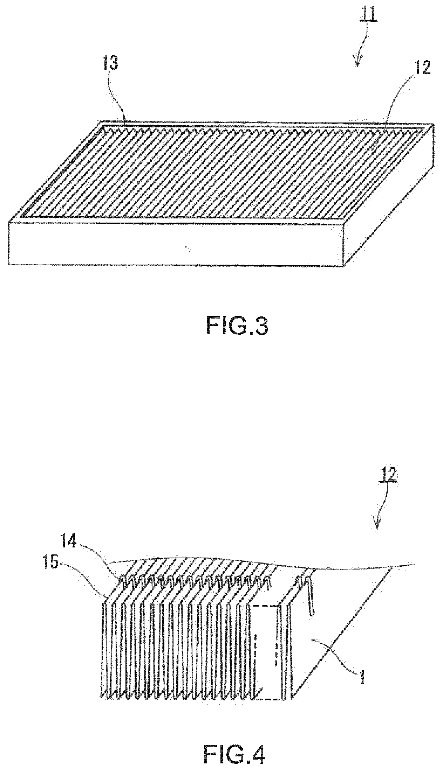

FIG. 3 shows an example of the filter unit of the present disclosure. A filter unit 11 shown in FIG. 3 includes a filter pleat pack 12 obtained by pleating the filter medium 1, and a frame 13 that supports the pleat pack 12. The frame 13 supports the periphery of the filter pleat pack 12 over the entire circumference. However, the configuration of the filter unit of the present disclosure is not limited to the example shown in FIG. 3.

As shown in FIG. 4, the filter pleat pack 12 has a structure in which the sheet-shaped filter medium 1 is folded into a pleated shape. In addition, the filter pleat pack 12 has a bead 14. The bead 14 is a string-shaped resin, and is a kind of spacer for maintaining the pleated shape of the filter medium 1. The bead 14 is disposed on the surface of the folded filter medium 1 so as to draw a continuous line or an intermittent line extending along a direction crossing pleat lines 15 (fold lines) of the filter medium 1.

In the filter pleat pack 12, the bead 14 may be disposed on one surface of the filter medium 1 or on both surfaces of the filter medium 1. In the filter medium 1 in which the PTFE porous membrane 2 is located at the outermost layer, the bead 14 may be disposed on the surface at the PTFE porous membrane 2 side. The bead 14 can be formed, for example, by applying a molten resin in a string shape to the surface of the filter medium 1. The resin included in the bead 14 is not limited, and examples thereof include polyamides, polyolefins, and ethylene-vinyl acetate copolymers.

A known method can be used for pleating the filter medium 1. The filter medium 1 can be pleated, for example, by using a reciprocating pleating machine or a rotary pleating machine.

The frame 13 is formed of, for example, a metal, a resin, or a composite material thereof. In the case where the frame 13 is formed of a resin, it is also possible to fix the filter pleat pack 12 to the frame 13 at the same time the frame 13 is formed. The configuration of the frame 13 may be the same as the configuration of a frame included in a conventional filter unit.

The filter unit 11 may include any member other than the above-described members.

The filter unit 11 can be used, for example, for allowing a gas such as air to pass therethrough and removing foreign matter such as dust contained in the gas. The filter unit 11 is typically an air filter unit that allows air to pass therethrough.

The filter unit 11 can be used, for example, for various products such as air purifiers, air conditioners, and cleaners. The air conditioners and the air purifiers include not only small products mainly intended for indoor use, but also large products such as air conditioning systems for buildings and products provided in transportation equipment such as automobiles and railroad vehicles. In addition, the filter unit 11 can be used for applications where a filter unit including an electret medium has been conventionally used. However, the application of the filter unit 11 is not limited to these examples.

EXAMPLES

Hereinafter, the present invention will be described more specifically by way of Examples. The present invention is not limited to the following Examples.

Methods for evaluating filter media produced in the Examples will be described below.

[Thickness]

The thicknesses of the air-permeable base layers and the filter media were evaluated by a digital dial gauge. In addition, the thicknesses of the PTFE porous membranes were evaluated as follows. First, each PTFE porous membrane, which is an object to be evaluated, was embedded in an epoxy resin, and then a cross-section including the PTFE porous membrane was exposed, polished and surfaced, and further ion-polished. Next, image analysis of a magnified observation image (magnification of about 500 times) of the cross-section obtained by using a field emission SEM (FE-SEM; JSM-7500F manufactured by JEOL Ltd., acceleration voltage: 5 kV, reflected electron image) was performed, thereby obtaining the thickness of the PTFE porous membrane. It should be noted that, at the time of image analysis, the thicknesses at at least 10 measurement points were evaluated while changing the location, and the average value of the thicknesses was regarded as the thickness of the PTFE porous membrane. The above method using the FE-SEM can also be used for evaluating the thicknesses of the air-permeable base layers and the PTFE porous membranes included in the filter media.

[Weight per Unit Area]

The weights per unit area of the PTFE porous membranes were each obtained by dividing the weight of the PTFE porous membrane by the area of the main surface thereof.

[Pressure Loss $PL_F$ and Collection Efficiency $CE_F$]

The pressure losses $PL_F$ and the collection efficiencies $CE_F$ of the filter media were evaluated by the above-described methods.

[Production of Filter Media]

(Example 1)

100 parts by weight of PTFE fine powder (F-104, manufactured by Daikin Industries, Ltd.) and 19 parts by weight of dodecane, which is a liquid lubricant, were uniformly mixed, and the obtained mixture was preformed. Next, the preform was paste-extruded into a sheet shape, and the obtained molded article was rolled to obtain a band-shaped sheet having a thickness of 200 μm. Next, the liquid lubricant was removed by drying from the obtained sheet, and then the sheet was stretched in the MD direction of the sheet at a stretching temperature of 280°C and a stretch ratio of 85 times, and subsequently stretched in the TD direction of the sheet at a stretching temperature of 150°C and a stretch ratio of 200 times by a tenter method to obtain a PTFE porous membrane A. The obtained PTFE porous membrane A had a thickness of 1.5 μm and a weight per unit area of 0.2 g/m$^2$.

Next, an airlaid non-woven fabric/PET non-woven fabric joined body (thickness: 320 μm, weight per unit area: 100 g/m$^2$, the airlaid non-woven fabric was formed of a composite fiber having a core-sheath structure with a PET core and a PE sheath and produced by the method described in paragraphs 0071 to 0073 of JP 2014-30825 A), which is an air-permeable base layer, and the PTFE porous membrane A were stacked and joined by heat lamination to obtain a filter medium A (thickness: 320 μm) having a laminated structure of PTFE porous membrane/air-permeable base layer. The air-permeable base layer and the PTFE porous membrane A were joined such that the airlaid non-woven fabric was in contact with the PTFE porous membrane A. The filter medium A had a pressure loss $PL_F$ of 20 Pa and a collection efficiency $CE_F$ of 80%. In the main surface at the PTFE porous membrane side of the filter medium of Example 1, it was confirmed by observation (magnification of 500 times) of this main surface with an SEM that the fibers included in the air-permeable base layer were exposed in the voids between the fibrils of the PTFE porous membrane and a plurality of fibrils extended so as to traverse the air-permeable region of the air-permeable base layer.

(Example 2)

A PTFE porous membrane B was obtained in the same manner as Example 1, except that the stretch ratio in the MD direction was 88 times. The obtained PTFE porous membrane B had a thickness of 1.5 μm and a weight per unit area of 0.2 $g/m^2$. Next, a filter medium B (thickness: 320 μm) having a laminated structure of PTFE porous membrane/air-permeable base layer was obtained in the same manner as Example 1, except that the PTFE porous membrane B was used instead of the PTFE porous membrane A. The obtained filter medium B had a pressure loss $PL_F$ of 12 Pa and a collection efficiency $CE_F$ of 65%. Also in the main surface at the PTFE porous membrane side of the filter medium of Example 2, it was confirmed by observation (magnification of 500 times) of this main surface with an SEM that the fibers included in the air-permeable base layer were exposed in the voids between the fibrils of the PTFE porous membrane and a plurality of fibrils extended so as to traverse the air-permeable region of the air-permeable base layer.

(Example 3)

A PTFE porous membrane C was obtained in the same manner as Example 1, except that the stretch ratio in the MD direction was 83 times. The obtained PTFE porous membrane C had a thickness of 1.6 μm and a weight per unit area of 0.2 $g/m^2$. Next, a filter medium C (thickness: 320 μm) having a laminated structure of PTFE porous membrane/air-permeable base layer was obtained in the same manner as Example 1, except that the PTFE porous membrane C was used instead of the PTFE porous membrane A. The obtained filter medium C had a pressure loss $PL_F$ of 25 Pa and a collection efficiency $CE_F$ of 87%. Also in the main surface at the PTFE porous membrane side of the filter medium of Example 3, it was confirmed by observation (magnification of 500 times) of this main surface with an SEM that the fibers included in the air-permeable base layer were exposed in the voids between the fibrils of the PTFE porous membrane and a plurality of fibrils extended so as to traverse the air-permeable region of the air-permeable base layer.

(Example 4)

A PTFE porous membrane D was obtained in the same manner as Example 1, except that the stretch ratio in the MD direction was 80 times. The obtained PTFE porous membrane D had a thickness of 1.8 μm and a weight per unit area of 0.2 $g/m^2$. Next, a filter medium D (thickness: 320 μm) having a laminated structure of PTFE porous membrane/air-permeable base layer was obtained in the same manner as Example 1, except that the PTFE porous membrane D was used instead of the PTFE porous membrane A. The obtained filter medium D had a pressure loss $PL_F$ of 30 Pa and a collection efficiency $CE_F$ of 91%. Also in the main surface at the PTFE porous membrane side of the filter medium of Example 4, it was confirmed by observation (magnification of 500 times) of this main surface with an SEM that the fibers included in the air-permeable base layer were exposed in the voids between the fibrils of the PTFE porous membrane and a plurality of fibrils extended so as to traverse the air-permeable region of the air-permeable base layer.

(Example 5)

A PTFE porous membrane E was obtained in the same manner as Example 1, except that the stretch ratio in the MD direction was 75 times. The obtained PTFE porous membrane E had a thickness of 2.0 μm and a weight per unit area of 0.3 $g/m^2$. Next, a filter medium E (thickness: 320 μm) having a laminated structure of PTFE porous membrane/air-permeable base layer was obtained in the same manner as Example 1, except that the PTFE porous membrane E was used instead of the PTFE porous membrane A. The obtained filter medium E had a pressure loss $PL_F$ of 34 Pa and a collection efficiency $CE_F$ of 98%. Also in the main surface at the PTFE porous membrane side of the filter medium of Example 5, it was confirmed by observation (magnification of 500 times) of this main surface with an SEM that the fibers included in the air-permeable base layer were exposed in the voids between the fibrils of the PTFE porous membrane and a plurality of fibrils extended so as to traverse the air-permeable region of the air-permeable base layer.

(Example 6)

The PTFE porous membrane A produced in Example 1 and spunbond non-woven fabrics (Eleves S0303WDO, manufactured by Unitika Ltd., thickness: 160 μm, weight per unit area: 30 $g/m^2$, formed of a composite fiber having a core-sheath structure with a PET core and a PE sheath), which are air-permeable base layers, were stacked such that the PTFE porous membrane A was sandwiched between a pair of air-permeable base layers, and were joined by heat lamination to obtain a filter medium F (thickness: 320 μm) having a laminated structure of air-permeable base layer/PTFE porous membrane/air-permeable base layer. The obtained filter medium F had a pressure loss $PL_F$ of 20 Pa and a collection efficiency $CE_F$ of 80%.

(Comparative Example 1)

100 parts by weight of PTFE fine powder (F-104, manufactured by Daikin Industries, Ltd.) and 19 parts by weight of dodecane, which is a liquid lubricant, were uniformly mixed, and the obtained mixture was preformed. Next, the preform was paste-extruded into a sheet shape, and the obtained molded article was rolled to obtain a band-shaped sheet having a thickness of 200 μm. Next, the liquid lubricant was removed by drying from the obtained sheet, and then the sheet was stretched in the MD direction of the sheet at a stretching temperature of 380°C and a stretch ratio of 150 times and subsequently stretched in the TD direction of the sheet at a stretching temperature of 150°C and a stretch ratio of 6 times by a tenter method to obtain a PTFE porous membrane G. The obtained PTFE porous membrane G had a thickness of 5.0 μm and a weight per unit area of 0.5 g/m$^2$.

Next, the PTFE porous membrane G and the air-permeable base layer used in Example 1 were stacked and joined by heat lamination to obtain a filter medium G (thickness: 320 μm) having a laminated structure of PTFE porous membrane/air-permeable base layer. The non-woven fabric joined body and the PTFE porous membrane G were joined such that the airlaid non-woven fabric was in contact with the PTFE porous membrane G. The obtained filter medium G had a pressure loss $PL_F$ of 15 Pa and a collection efficiency $CE_F$ of 53%.

(Comparative Example 2)

A PTFE porous membrane H was obtained in the same manner as Comparative Example 1, except that the stretch ratio in the MD direction was 90 times and the stretch ratio in the TD direction was 6 times. The obtained PTFE porous membrane H had a thickness of 6.0 μm and a weight per unit area of 0.8 g/m$^2$. Next, a filter medium H (thickness: 320 μm) having a laminated structure of PTFE porous membrane/air-permeable base layer was obtained in the same manner as Comparative Example 1, except that the PTFE porous membrane H was used instead of the PTFE porous membrane G. The obtained filter medium H had a pressure loss $PL_F$ of 40 Pa and a collection efficiency $CE_F$ of 80%.

(Comparative Example 3)

A PTFE porous membrane I was obtained in the same manner as Example 1, except that the stretch ratio in the MD direction was 20 times and the stretch ratio in the TD direction was 30 times. The obtained PTFE porous membrane I had a thickness of 3.5 μm and a weight per unit area of 0.7 g/m$^2$. Next, a filter medium I (thickness: 320 μm) having a laminated structure of PTFE porous membrane/air-permeable base layer was obtained in the same manner as Example 1, except that the PTFE porous membrane I was used instead of the PTFE porous membrane A. The obtained filter medium I had a pressure loss $PL_F$ of 65 Pa and a collection efficiency $CE_F$ of 98%.

The evaluation results of the filter media produced in the Examples and the Comparative Examples are summarized in Table 1 below.

[Table 1]

| | Ex. 1 | Ex. 2 | Ex. 3 | Ex. 4 | Ex. 5 | Ex. 6 | Comp. Ex. 1 | Comp. Ex. 2 | Comp. Ex. 3 |
|---|---|---|---|---|---|---|---|---|---|
| Configuration of multilayer structure | Two layers | Two layers | Two layers | Two layers | Two layers | Three layers | Two layers | Two layers | Two layers |
| Thickness of PTFE porous membrane (μm) | 1.5 | 1.5 | 1.6 | 1.8 | 2.0 | 1.5 | 5.0 | 6.0 | 3.5 |
| Weight per unit area of PTFE porous membrane (g/m$^2$) | 0.2 | 0.2 | 0.2 | 0.2 | 0.3 | 0.2 | 0.5 | 0.8 | 0.7 |
| Pressure loss (Pa) | 20 | 12 | 25 | 30 | 34 | 20 | 15 | 40 | 65 |

(continued)

| | Ex. 1 | Ex. 2 | Ex. 3 | Ex. 4 | Ex. 5 | Ex. 6 | Comp. Ex. 1 | Comp. Ex. 2 | Comp. Ex. 3 |
|---|---|---|---|---|---|---|---|---|---|
| Collection efficiency (%) | 80 | 65 | 87 | 91 | 98 | 80 | 53 | 80 | 98 |
| * Configuration of multilayer structure | | | | | | | | | |

Two layers: PTFE porous membrane/air-permeable base layer
Three layers: air-permeable base layer/PTFE porous membrane/air-permeable base layer

As shown in Table 1, in each of the filter media of the Examples, a low pressure loss and a high collection efficiency were achieved, and the filter medium was able to replace an electret medium.

INDUSTRIAL APPLICABILITY

The filter medium of the present invention can be used for applications where a conventional filter medium, for example, an electret medium, has been used.

## Claims

1. A filter medium comprising a polytetrafluoroethylene (PTFE) porous membrane and an air-permeable base layer, wherein
the filter medium has a pressure loss $PL_F$ of less than 40 Pa when air is passed therethrough at a linear velocity of 5.3 cm/sec, and
the filter medium has a collection efficiency $CE_F$ of 65% or more when a linear velocity of a gas to be filtered is set to 5.3 cm/sec and particle diameters of particles to be collected are set to be within a range of 0.3 to 0.5 $\mu$m.

2. The filter medium according to claim 1, wherein the filter medium has a PF value of 30 or more, obtained by the following equation using the pressure loss $PL_F$ and the collection efficiency $CE_F$,

$$\text{Equation: PF value} = \{-\log[(100-CE_F)/100]/(PL_F/9.8)\}\times 100$$

3. The filter medium according to claim 1 or 2, wherein the PTFE porous membrane is located at an outermost layer.

4. The filter medium according to claim 3, wherein
when the PTFE porous membrane is viewed in a direction perpendicular to a main surface of the PTFE porous membrane,
the air-permeable base layer is exposed in voids between fibrils of the PTFE porous membrane.

5. The filter medium according to any one of claims 1 to 4, wherein the PTFE porous membrane has a thickness of less than 3.0 $\mu$m.

6. The filter medium according to any one of claims 1 to 5, wherein the PTFE porous membrane has a weight per unit area of less than 0.5 g/$m^2$.

7. The filter medium according to any one of claims 1 to 6, wherein the air-permeable base layer is a non-woven fabric.

8. The filter medium according to claim 7, wherein the non-woven fabric includes a composite fiber having a core-sheath structure with a core including a polyester resin and a sheath including a polyolefin resin and covering the core.

9. A filter unit comprising the filter medium according to any one of claims 1 to 8.

10. The filter unit according to claim 9, wherein the filter medium is pleated.

1
4
2
3

FIG.1

4
3
5
2
7
6

FIG.2

11
13
12

FIG.3

12
14
15
1

FIG.4

## INTERNATIONAL SEARCH REPORT

International application No. PCT/JP2019/021891

A. CLASSIFICATION OF SUBJECT MATTER

Int.Cl. B01D39/16(2006.01)i, B01D46/52(2006.01)i, B01D69/02(2006.01)i, B01D69/10(2006.01)i, B01D69/12(2006.01)i, B01D71/26(2006.01)i, B01D71/36(2006.01)i, B01D71/48(2006.01)i

According to International Patent Classification (IPC) or to both national classification and IPC

B. FIELDS SEARCHED

Minimum documentation searched (classification system followed by classification symbols)

Int.Cl. B01D39/16, B01D46/52, B01D69/02, B01D69/10, B01D69/12, B01D71/26, B01D71/36, B01D71/48

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2013-173078 A (NITTO DENKO CORP.) 05 September 2013, claims 1, 6, 9, paragraphs [0031], [0055], [0068]-[0069], [0074], example 1, fig. 1-2 & US 2015/0013295 A1, claims 1, 6, 9, paragraphs [0032], [0056], [0070]-[0071], [0076], example 1, fig. 1-2 & WO 2013/125205 A1 & EP 2818223 A1 & TW 201343234 A & CN 104144734 A & KR 10-2014-0125443 A | 1-10 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 22 July 2019 (22.07.2019) | 06 August 2019 (06.08.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/021891

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-32514 A (NITTO DENKO CORP.) 14 February 2013, paragraph [0002], fig. 1 & US 2014/0130470 A1, paragraph [0002], fig. 1 & WO 2013/005430 A1 & EP 2730607 A1 & TW 201306931 A & CN 103649189 A & KR 10-2014-0056232 A | 1-10 |
| A | JP 2000-140587 A (TONEN TAPIRUSU KK) 23 May 2000, entire text & US 6309438 B1, entire text | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006159133 A
- JP 2014030825 A